# EUROPEAN PATENT APPLICATION

(11) **EP 1 098 487 A2**
(43) Date of publication of application: **09.05.2001**
(21) Application number: 00203747.1
(22) Date of filing: 27.10.2000
(51) Int. Cl.: H04L 29/06

(54) **Method and system for coordinating session activities at a self-service financial transaction terminal**

(30) Priority: 01.11.1999 US 162816 P; 01.11.1999 US 163000
(71) Applicant: Citicorp Development Center, Inc., Los Angeles, California 90066 (US)
(72) Inventor: Yu, Chris S., Hacienda Heights, California 91745 (US)
(74) Representative: Hynell, Magnus

(57) **Abstract**

The present invention makes use of computer hardware and software to provide a session manager for a self-service financial transaction terminal, such as an ATM or a financial terminal. The method and system identify and coordinate session activities on a SSFT terminal and control straight-through, beginning-to-end processing on these devices. More particularly, the present invention identifies the type of session activity to be initiated and manages these activities for front-end and back-end users, for diagnostic sessions, for administrative sessions, and by queuing requests for initiating sessions. To manage these activities, the session manager: (1) identifies the session request; (2) allocates a priority identifier to the session request; (3) compares the priority identifier with the real-time status of the SSFT terminal to determine how to manage the session request; (4) queues requests for initiating sessions based on a session result; and (5) selectively implements the session result. The session manager updates parameters associated with the SSFT terminal to the global communications network when a session result is determined, queued, or implemented.

The session manager system provides the following automated functions for a SSFT terminal running on a global communications network: (1) brings up an interactive interface display, such as, for example, accessing a web-browser in full-screen mode; (2) sets and re-sets the interactive interface display during system shutdown and startup; (3) coordinates starting and re-starting of session activities; (4) reports various status information when a session activity agent inquires about active session activities running on the SSFT terminal or about another agent; and/or (7) reports the state of the SSFT terminal and SSFT devices/sensors to indicate whether the terminal and/or device/sensor is in use, idle, or shut-down.

## Description

### PRIORITY APPLICATIONS

This application claims priority to co-pending US Provisional Application Serial No. 60/162,816 filed November 1, 1999, entitled "Method And System For Coordinating Session Activities At A Self-Service Financial Transaction Terminal (ATM Session Manager)," and is incorporated herein by reference.

This application claims priority to co-pending US Provisional Application No. 60/163,000, filed November 1,1999, entitled "Method And System Of Remote Operator Interface For A Self-Service Financial Terminal (Remote Operator Interface)," and is incorporated herein by reference.

### CROSS REFERENCE TO RELATED APPLICATIONS

This application relates to Attorney Docket No. CITI0198/T0091-195417, filed simultaneously, entitled "Method and System for Secure Communication Between a Self-Service Financial Transaction Terminal And A Remote Operator Interface," and is incorporated herein by reference.

This application relates to Attorney Docket No. CITI0197/T0091-195418, filed simultaneously, entitled "Method and System For Obtaining Device Services On A Self-Service Financial Transaction Terminal," and is incorporated herein by reference.

This application relates to Attorney Docket No. CITI0200/T0091-195419, filed simultaneously, entitled "Method And System For Installing And/Or Upgrading Software On A Self-Service Financial Transaction Terminal From A Remote Computer," and is incorporated herein by reference.

This application relates to Attorney Docket No. CITI0202/T0091-195420, filed simultaneously, entitled "Method And System For Simultaneous And Unattended Installation Of Software On A Self-Service Financial Transaction Terminal," and is incorporated herein by reference.

This application relates to Attorney Docket No. CITI0199/T0091-195421, filed simultaneously, "Method And System For Remote Operator Interface With A Self-Service Financial Transaction Terminal," and is incorporated herein by reference.

This application relates to Attorney Docket No. CITI0203/T0091-195578, filed simultaneously, entitled "Method And System For Configuration Of Self-Service Financial Transaction Terminals For A Common Software Release," and is incorporated herein by reference.

This application relates to US Provisional Application No. 60/162,673, filed November 1, 1999, entitled "Method And System For Secure Communication Between A Self-Service Transaction Terminal And A Remote Operator Interface (Remote Operator Interface Security)," and is incorporated herein by reference.

This application relates to US Provisional Application No. 60/162,994, filed November 1, 1999, entitled "Method And System For Extensions For Financial Services Service Provider Framework For A Self-Service Transaction Terminal (XFS Service Provider Framework)," and is incorporated herein by reference.

This application relates to US Provisional Application No. 60/163,002, filed November 1, 1999, entitled "Method And System For Installing And/Or Upgrading Software On A Self-Service Financial Transaction Terminal From a Remote Computer (Remote Installation/Software Upgrade)," and is incorporated herein by reference.

This application relates to US Provisional Application No. 60/162,815, filed November 1, 1999, entitled "Method And System For Simultaneous And Unattended Installation Of Software On A Self-Service Financial Transaction Terminal (Global Installation Framework)" and is incorporated herein by reference.

This application relates to US Provisional Application No. 60/162,672, filed November 1, 1999, entitled "Method And System For Configuration Of Self-Service Financial Terminals For A Common Software Release (Framework for Configuration of Self-Service Financial Terminals)," and is incorporated herein by reference.

### COPYRIGHT NOTIFICATION

A portion of the disclosure of this patent document and its figures contain material that is subject to copyright protection. The copyright owner has no objection to the facsimile reproduction by anyone of the patent document or the patent disclosure, as it appears in the Patent and Trademark Office patent files or records, but otherwise reserves all copyrights whatsoever.

### BACKGROUND OF THE INVENTION

### 1. Field of the Invention

The present invention relates generally to the field of self-service financial transaction terminals, such as automatic teller machines or bank terminals, and more particularly, to a method and system for coordinating and managing session activities at a self-service financial transaction terminal.

### 2. Background

A Self-Service Financial Transaction (SSFT) terminal, such as an Automatic Teller Machine (ATM), is essentially a machine that has a computer within it that runs an operating system, such as Windows NT, and other software applications to support global operations for self-service device to carry out financial transactions. Different types of session activities occur at an SSFT terminal, one of the most critical is customer transaction activities, such as a balance inquiry of a financial account. Another type of session activity includes administration of the SSFT terminal when it is necessary to perform a settlement between the SSFT terminal and the host for financial transactions that have occurred since the last time a settlement was performed. Between the SSFT terminal and the global communications network, there are other session activities, such as management to remotely control the SSFT terminal, such as, for example, to stop or to reboot the ATM. Another kind of session activity includes maintenance of the SSFT terminal when there is a hardware or device related problem that requires a field service engineer to go to that SSFT terminal, such as, for example, a jammed ATM door or a malfunctioning ATM key.

In the foregoing examples, SSFT terminal performance may occasionally be disrupted due to simultaneous session activities that result in a collision in terms of contention for resources or in a collision that could affect the integrity, for example, of a customer transaction while it is progress. Thus, a need exists for a method and system for controlling and managing session activities to solve the above problems, as well as to provide additional flexibility and functionality in identifying and controlling corrective actions. A need also exists for a method and system that are able to collect and accumulate information on the type and frequency of session activities in a fast, reliable, and efficient manner. There is a further need for a method and system that are able to: (1) accommodate additional session activities as the system expands; (2) operate on many different computer platforms and operating systems; and (3) operate with many different software applications.

### SUMMARY OF THE INVENTION

To overcome these problems and to achieve other benefits, the present invention makes use of computer hardware and software to provide a session manager for a SSFT terminal. The present invention provides a method and system for identifying, coordinating, and managing session activities on a SSFT terminal, such as an ATM or a financial terminal, and for controlling straight-through, beginning-to-end session activity procession on these devices. For example, the session manager controls session activity for customer session, local operator sessions, diagnostic session, remote system management sessions, remote administrative sessions, and remote operator sessions. More particularly, the present invention identifies the type of session activity to be initiated and manages these activities for front-end users (e.g., customers) and back-end users (e.g., field engineers). In order to manage these activities, the session manager: (1) identifies the session request; (2) allocates a priority identifier to the session request; (3) compares the priority identifier with the real-time status of the SSFT terminal (e.g., SSFT terminal is actively performing a customer session) to determine how to manage the session request (i.e., determines a session result); (4) queues requests for initiating sessions based on a session result; and (5) selectively implements the session result. In a further embodiment, the session manager updates parameters associated with the SSFT terminal to the global communications network when a session result is determined, queued, or implemented.

In another embodiment, this invention provides the following functions for a SSFT terminal running on a global communications network: (1) brings up an interactive interface display, such as, for example, accessing a web-browser in full-screen mode; (2) sets and re-sets the interactive interface display during system shutdown and startup; (3) coordinates starting and re-starting of session activities; (4) reports various status information when a session agent (e.g., operator interface agent) inquires about active session activities running on the SSFT terminal or about another agent (e.g., system management agent); and/or (7) reports the state of the SSFT terminal and SSFT devices/sensors (e.g., card reader, touch screen, PIN encryptor, front cover sensor, mode switch, and safe door) to indicate whether the terminal and/or device/sensor is in use, idle, or shut-down.

In another embodiment, this invention recovers from being out-of-service by monitoring the status of the host connection and of other devices/sensors, such as, the card reader, touch screen, PIN encryptor, front cover sensor, mode switch, and safe door, that may impact the operation status of the SSFT terminal. Whether or not a device may affect the SSFT terminal operation status is configurable based on capability of the hardware platform and the specific business requirements set forth by a financial institution.

In another embodiment, this invention displays an out-of-service screen under various scenarios, such as, for example: (1) during system startup and shutdown; (2) when a critical device has failed; (3) when the safe door is open when the SSFT terminal is idle; and (4) when host connection is down.

In another embodiment, this invention reports various SSFT terminal status information when the system management agent or operator interface (OI) inquires about the SSFT terminal session management component. Further, this invention reports to the system management agent through various means when the SSFT terminal is out-of-service and when it is back in service after having been out-of-service.

Further details on these embodiments and other possible embodiments of the present invention are set forth below. As is appreciated by those of ordinary skill in the art, the method and system of the present invention have wide utility in a number of areas as illustrated by the wide variety of advantages and features discussed below.

It is an advantage and feature of the present invention to provide a session management method and system that afford basic checks on simultaneous session activities and prevent collisions of multiple simultaneous session activities.

It is another advantage and feature of the present invention to provide a flexible session management system that is capable of accommodating changes in the system architecture.

It is another advantage and feature of the present invention to make it easier for financial institutions (e.g., businesses, financial service providers, etc.) to accommodate growth in the number of session activities.

It is another advantage and feature of the present invention to support various session activities, including new session activities as they evolve and are defined by the financial market.

It is another advantage and feature of the present invention to provide a session management system that is capable of running on many different hardware platforms, operating systems, programming languages, software applications, and with other computer technology.

It is another advantage and feature of the present invention to have a standardized interactive interface display (e.g., front display of an ATM, local operator panel of an ATM, host computers for administrative sessions, etc.) for each type of SSFT terminal regardless of the computer system (i.e., the hardware platforms, operating systems, programming languages, software applications, and other computer technology).

It is another advantage and feature of the present invention for an SSFT terminal to interface and communicate with a global network communications system through a variety of electronic mediums, including wireline and wireless technology, such as, for example, WAN, LAN, PSTN, satellite systems, other public and private communications networks, and the like.

It is another advantage and feature of the present invention to use diverse SSFT terminal communication devices (e.g., ATMs with different manufacturers and design specifications) with the session manager.

It is another advantage and feature of the present invention to use diverse electronic communication devices, such as PCs, Macintosh, pen-based computers, interactive telephones, interactive television, interactive pagers, and the like with the session manager.

It is another advantage and feature of the present invention to store, maintain, and manage session activity data to a global network communications server.

It is another advantage and feature of the present invention to secure the source code on the SSFT terminal.

It is another advantage and feature of the present invention to secure the source code associated with a SSFT terminal and its agents on the global communications network.

It is another advantage and feature of the present invention to provide for multiple levels of user access and to facilitate multiple levels of security related to those levels of user access.

It is another advantage and feature of the present invention to provide a user with access to a variety of useful administrative features, such as, for example, performing settlements or viewing transection counters.

It is another advantage and feature of the present invention to provide labor savings by eliminating the need for manually resolving session activity collisions.

It is another advantage and feature of the present invention to maximize SSFT terminal and other related resources including devices/sensors and agents controlled by the session manager.

It is another advantage and feature of the present invention to significantly reduce the time required by the overall process to identify, coordinate, and manage session activities.

It is another advantage and feature of the present invention to allow a user to select a language (e.g., English, French, Spanish, German, etc.) to display session activity information, including data that is uploaded or downloaded by a user.

It is another advantage and feature of the present invention to provide a session management method and system for a financial institution's global communications network.

It is another advantage and feature of the present invention to provide a session management method and system for a financial institution's ATM network.

These advantages and features may be accomplished singularly, or in combination, in one or more of the embodiments of the present invention.

Additional advantages, features, objects, and uses of this invention are set forth in the detailed description that follows and will become more apparent to those skilled in the art upon examination of the following or by practice of the invention.

### BRIEF DESCRIPTION OF THE FIGURES

Other advantages, features, objects, and uses of the present invention are more clearly understood by reference to the following description taken in connection with the accompanying figures, in which:
FIG. 1 is an overview of an ATM Session Manager in an embodiment of the present invention.
FIG. 2 is a representation of the communications among the ATM Session Manager and the Session Agents in an embodiment of the present invention.

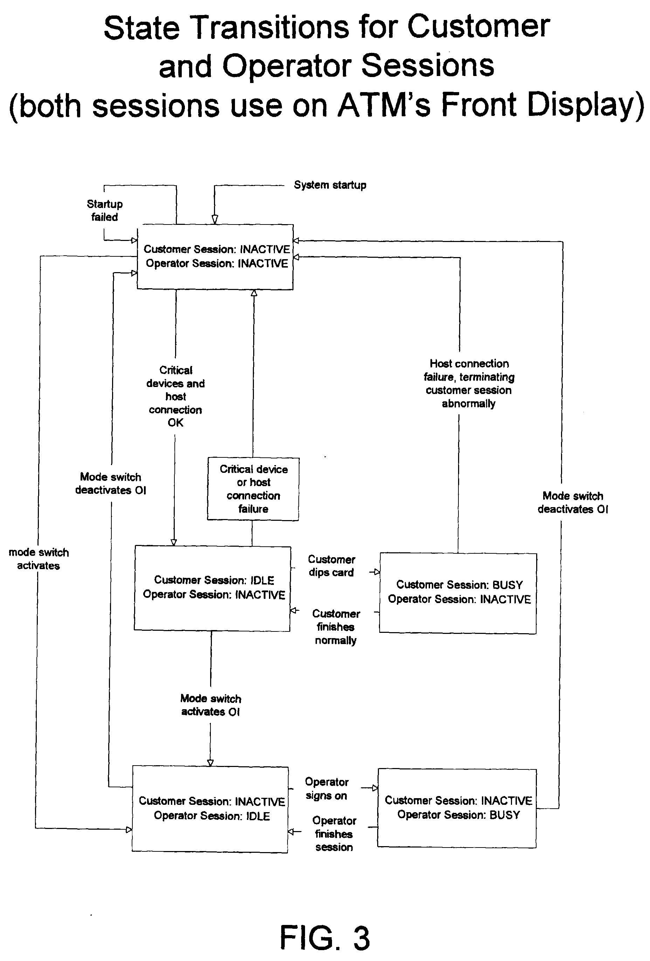

FIG. 3 is a representation of State Transitions for Customer and Operator Sessions wherein both sessions use an ATM's front display in an embodiment of the present invention.

### DETAILED DESCRIPTION

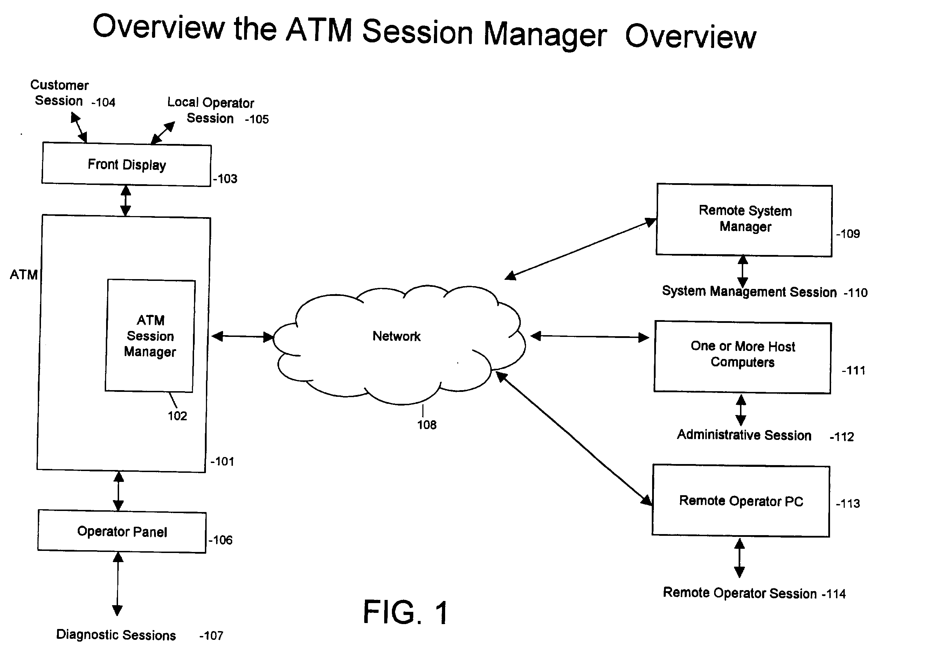

FIG. 1 represents an overview of an embodiment of the present invention, wherein an ATM session manager 102 identifies and coordinates various session activities to assure that they do not collide with each other in terms of contention for resources or affect the integrity of a session activity, such as a customer session. The ATM session manager 102 provides, for example, a coordination type of responsibility for session activities and essentially allows a smooth operation of the ATM among the front end users, such as customers, and the back end users. The back end users include, for example, administrators, operators of the machine at the bank center or the financial center where the machine is located, remote operators/administrators, field engineers, branch staff, and the like.

The ATM session manager 102: (1) identifies the session request; (2) allocates a priority identifier to the session request; (3) compares the priority identifier with the real-time status of the SSFT terminal (e.g., SSFT terminal is actively performing a customer session) to determine how to manage the session request (i.e., determines a session result); (4) queues requests for initiating sessions based on a session result; and (5) selectively implements the session result. In a further embodiment, the ATM session manager 102 updates parameters associated with the ATM 101 to the network 108 when a session result is determined, queued, or implemented.

Local sessions are communicated to the ATM session manager 102 using the front display 103 to carry out customer sessions 104 and local operator sessions 105. In addition, the local operator panel 106 communicates with the ATM session manager 102 to carry out diagnostic sessions 107.

The ATM session manager 102 further allows the network 108 to remotely interface with and control the ATM 101. The ATM session manager 102 makes use of computer hardware and software using the overall infrastructure of the network system management system (network) 108 to communicate with remote components 109, 111, and 113 to carry out a remote session, such as system management sessions 110, administrative sessions 112, and remote operator sessions 110. For example, a system management session 110 is initiated when the remote system manager 109 communicates with the ATM session manager 102 over the network 108. The ATM session manager 102 decides and grants the permission for that type of session to begin. The session is then communicated back to the remote component over the network 108.

In an embodiment of the present invention, the ATM session manager 102 can grant the permission for the session to begin at a certain time, when a request is made, for example, remotely from the remote system manager 109 to do a rebooting of the system or to stop the activity allowed at the ATM 101. The ATM session manager 102 decides what is the right sequence of processing that should be allowed to happen. For example, a customer session 104 is currently ongoing and there is a request that comes in from the system management component 104 to stop the ATM 101 from any customers' sessions. That command is processed, but it will not affect the current customer activity, and the customer is allowed to finish the session.

When a customer session 104 is finished, the ATM session manager 102 selectively allows another customer to walk up to the machine and start a new customer session. The ATM session manager 102 will not start a new customer session, if, for example, any of the following conditions exist at the end of a customer session: (1) the host is down; (2) a critical device (e.g., card reader failure) is not operational; (3) there is an outstanding request to start an operator session at the front display; (4) there is an outstanding request to run the hardware diagnostics utility; (5) there is an outstanding request to do a self-test operation on all the ATM devices; and/or (6) there is an outstanding request to start an administrative session.

The ATM session manager 102 for an embodiment of the present invention does not interrupt the customer session 104 that is in process, but when the session is completed, the ATM session manager 102 briefly stops the ATM 101 from providing any customer service, so that the next customer will not be able to use the ATM 101. In another example, a field engineer needs to provide some maintenance functions and, similarly, the customer is currently using the machine. In order for the field engineer to go in and take control of the machine, the engineer makes a request which ultimately is handled by the ATM session manager 102. The ATM session manager 102 acknowledges the request and waits until the customer session 104 is finished before allowing that to happen.

The ATM session manager 102 for an embodiment of the present invention provides control of the ATM 101 and, in allowing the customer to proceed and not disturbing whatever the customer is currently doing, preserves the highest priority. However, whenever the current customer session 104 is finished, the ATM session manager 102 decides the next session activity to initiate. For example, if the next session is a local operator session 105 to diagnose the hardware, then no customer session 104 is started up and the ATM 101 is placed out-of-service. Thus, the ATM session manager 102 for an embodiment of the present invention provides coordination in terms of allowing a different type of session to begin and not allowing the customer to use the machine. In other words, the ATM session manager 102 automatically coordinates various types of session activities from contention with customers who might want to use the ATM 101.

In another embodiment of the present invention, when, for example, an administrative session 112 is finished, at that point, the application that controls the administrative session 112 tells the ATM session manager 102 whether to allow a customer session 104 to begin now or leave it at the current state, which is the out of service condition. At that point, that is a decision that is generally dictated by the nature of the administrative session 112, and when the administrative session 112 is ended, a decision can be made to keep the ATM 101 out-of-service.

In another embodiment of the present invention, there are various points from which the various kinds of sessions can be performed. For example, the ATM 101 is connected over a network 108 to one or more host computers 111 that communicate data for an administrative session 112, depending on the configuration at the particular business or location, as different businesses have different configurations. Assume there is one host 111 to which the ATM 101 talks in terms of getting approval for transactions from the host, which would be one connection. Another network connection, for example, is through a remote system manager that communicates data for a system management session 110. This is typically a remote connection, but they are on the same network 103. Still another connection, for example, is to another remote operator PC 113 that communicates over the network 108 to the ATM 101 through which an operator can initiate a remote operator session 114. From that PC 113, a remote operator session 106 can be performed. At the ATM 101, there is a user interface that is typically called an operator panel 106 and is generally attached to the back of the ATM 101. At the operator panel 106, a local operator can initiate a diagnostic session 107 to start running the hardware devices diagnostics and other types of hardware maintenance functions. A back-end user can also initiate a local operator session 105 using the front display 103 of the ATM 101.

In another embodiment, an administrative session 112 is similar to a remote operator session 114 because it is typically done on a regular basis to synchronize the transaction record history between the ATM 101 and the host 111, such as reconciling deposits and withdrawals.

Referring now to another embodiment, the session manager performs the following functions during system startup: (1) starts an interactive interface display, such as, for example, accessing a web-browser in full-screen mode and displaying it on a front display; (2) hides the mouse cursor of the browser; (3) loads the out-of-service screen web page; (4) re-sets the video for the interactive interface display, so that the out-of-service screen becomes visible; (5) sets and re-sets the interactive interface display during system shutdown and startup; (6) coordinates starting and re-starting of session activities; (7) reports various status information when a session agent (e.g., operator interface agent) inquires about active session activities running on the SSFT terminal or about another agent (e.g., system management agent); and/or (8) reports the state of the SSFT terminal and SSFT devices/sensors (e.g., card reader, touch screen, PIN encryptor, front cover sensor, mode switch, and safe door) to indicate whether the terminal and/or device/sensor is in use, idle, or shut-down.

In another embodiment, this invention recovers from being out-of-service by monitoring the status of the host connection and of other devices/sensors, such as, the card reader, touch screen, PIN encryptor, front cover sensor, mode switch, and safe door, that may impact the operation status of the SSFT terminal. Whether or not a device may affect the SSFT terminal operation status is configurable based on capability of the hardware platform and the specific business requirements set forth by a financial institution.

In another embodiment, this invention displays an out-of-service screen under various scenarios, such as, for example: (1) during system startup and shutdown; (2) when a critical device has failed; (3) when the safe door is open when the SSFT terminal is idle; and (4) when host connection is down.

During system shutdown, the session manager performs the following functions: (1) terminates the web browser, so that the out-of-service screen on a NT desktop becomes visible; (2) sets the video for the interactive interlace display (e.g., the front display of an ATM); and (3) blanks out the interactive interface display so that system commands and parameters are not visible by a customer or another user.

Additionally, the session manager provides an option to request an operator session be started on the interactive interface display. When this option is selected, one of following occurs. First, if the SSFT terminal, such as an ATM, is in use by a customer, the session manager will display the out-of-service screen on the interactive interface display as soon as the customer session is finished. The out-of-service screen will be displayed for about 30 seconds before the operator sign on screen is displayed. Second, if the SSFT terminal is in idle mode, the session manager will display the out-of-service screen immediately. The out-of-service screen will be displayed for about thirty (30) seconds before the operator sign on the interactive interface display is shown. Third, if the SSFT terminal is already in out-of-service mode, the out-of-service screen will be displayed for an additional thirty (30) seconds before the operator sign on the interactive interface display is shown.

When an operator session has ended, the session manager does not re-start another operator session. To start another operator session, a user must select that option again. Still another option is available for the session manager to start the diagnostics utility. When that option is selected, one of following will occur. (1) if the SSFT terminal is in use by a customer, the session manager will display the out-of-service screen as soon as the customer session is finished; or (2) if the SSFT terminal is in idle mode, the session manager will display the out-of-service screen immediately.

The session manager then requests a device manager to release ownership of the devices, so that the diagnostics can use the devices. When the diagnostics is done, the session manager informs the device manager to obtain ownership of the devices. The session manager then attempts to start a customer session. The out-of-service screen is displayed until a customer session is started.

The out-of-service screen is displayed when an SSFT terminal is in out-of-service condition. For instance, an ATM is in out-of-service condition when a host is down or when a critical device is not operational. A device is considered critical if it must be operational in order for a customer to use the ATM. Examples of critical devices include the card reader, encrypted touch-screen, and switches. Further, the out-of-service screen might says the following: "I'm sorry. This ATM is temporarily out of service. Please try another one or come back later."

Additionally, an out-of-service screen may also be displayed during some transitional conditions such as: (1) SSFT terminal is in startup or shutdown mode; or (2) SSFT terminal is in transition from one session to another session, such as, a customer session to an operator session. The out-of-service screen is also displayed when the SSFT terminal is performing functions initiated by an operator, such as, for example, when the SSFT terminal is running a self test on devices or when the diagnostics utility is running.

When the SSFT terminal is in an out-of-service condition, the session manager monitors changes in the conditions causing the SSFT terminal to be out-of-service. For example, when the host is up or when a critical device becomes operational, the session manager would be informed of the status condition change. When the host connection is available and when all critical devices are operational again, the session manager would then start a customer session.

The session manager supports status inquiry initiated locally in an operator interface agent or remotely from the system management agent. In response to the inquiry, the session manager reports status information, such as, SSFT terminal status (i.e., active, idle or down), customer session status (i.e., available or unavailable), back administrative utility running (i.e., yes or no), or diagnostics utility running (i.e., yes or no). The same status information is provided, whether inquiry is initiated locally or remotely. In a further embodiment, the session manager also provides updated status information as it changes, to any agent interested in knowing when those changes occur. Examples of agents interested in getting status information updates are the system management agent and the operator interface agent. The session manager will report the following updated status information such as, SSFT terminal status (i.e., up or down), customer session status (i.e., available or unavailable), back administrative utility running (i.e., yes or no), diagnostics utility running (i.e., yes or no), or SSFT terminal in use by customer (i.e., yes or no).

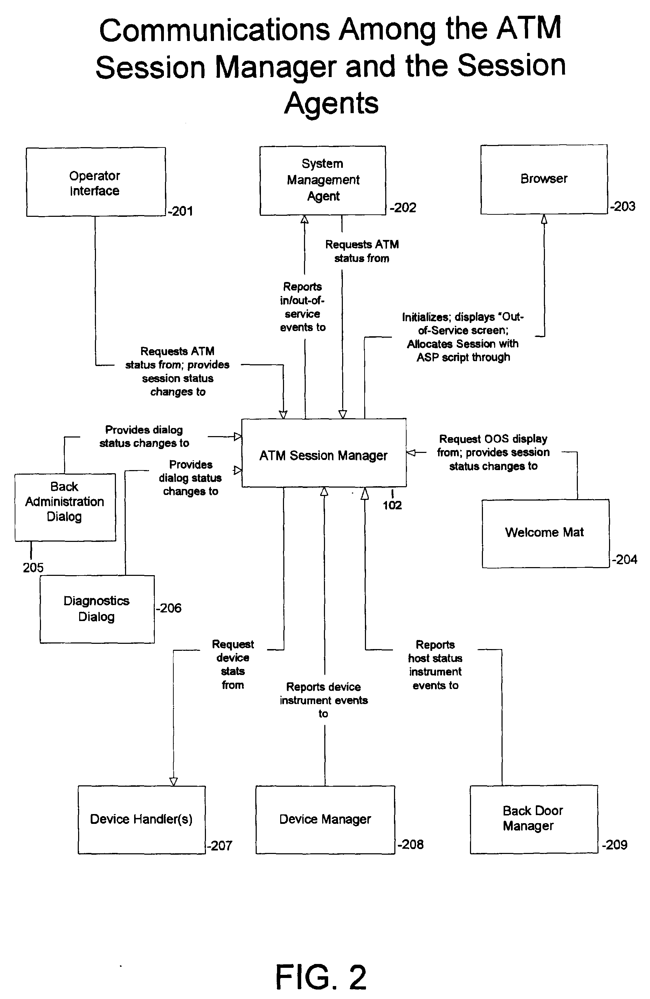

Figure 2 represents an exemplary embodiment of the communications among the ATM Session Manager 102 described in Figure 1 and the session agents. Table 1 below summarizes the communication among the multiple session agents set forth in Figure 2.

**Table 1**

| **Session Agent Communications with the ATM Session Manager** | |
|---|---|
| **Objects** | **Responsibilities** |
| Browser 203 | Starts session |
| Welcome Mat 204, | Receives session status changes |
| Operator Interface 201 | |
| Device Manager 208 | Receives device instrument events |
| Device Handler(s) 207 | Requests device status |
| Back Door Manager 209 | Receives host status instrument events |
| System Management Agent 202, | Responds to inquires about ATM status |
| Operator Interface 201 | |
| Back Administrative Dialog 205, | Receives OI dialogs status changes |
| Diagnostics Dialog 206 | |
| System Management Agent 202 | Generates instrument events when ATM goes in-service or out-of-service |
| Browser 203 | Displays out-of-service screen |

In another embodiment, the session manager defines states of an ATM based on the current status of a customer session and of a local operator session. Table 2 below summarizes the possible states of a customer session and of a local operator session. For this embodiment, the customer and local operator sessions both require using the front display of the interactive interface display (e.g., a front loading Personas 75 ATM from NCR). Therefore, it isn't possible to have both customer and a local operator sessions idle or active at the same time. However, other embodiments allow concurrent customer and remote operator sessions (e.g., other ATM platforms, such as, for example rear-service P75, SlimCAT, and NT CAT). For example, a customer session may be locally initiated using the front display and a remote operator session may be remotely initiated over an operator PC coupled with the network.

State transitions are induced by external events or operating conditions. Examples of external events that trigger ATM state transitions include the following:
- Operator mode switch is set to normal position
- Operator mode switch is set to supervisor position
- Customer has dipped a card
- Customer session is finished
- Operator has signed on
- Operator session is finished

Examples of operating conditions that trigger ATM state transitions include the following:
- Host status is down
- Host status is up
- A device configured as critical is down
- A device configured as critical is up
- Session allocation succeeds

**Table 2**

| **States of an ATM** | | | |
|---|---|---|---|
| **STATE** | **Operator - Inactive** | **Operator - Idle** | **Operator - Busy** |
| **Customer - Inactive** | system startup or shutdown, critical device failure, broken host connection | mode switch set to 'supervisor' position, operator hasn't signed on | Operator using one of the OI functions |
| **Customer - Idle** | waiting for customer card dip to start session | | |
| **Customer - Busy** | customer doing transactions | | |

When the customer and local operator sessions are both inactive, an out-of-service displayed is displayed on the front display of the ATM. If there is a critical device failure or a broken host connection, the customer session will never go to the idle state,until the problem is resolved. However, the local operator session can transition to the idle state when the mode switch is set to the 'supervisor' position. During system startup and shutdown, the session manager and the browser are not available. Under those situations, in an embodiment of the present invention, the NT wallpaper serves as the out-of-service display.

When the customer session is idle and the local operator session is inactive, the Welcome Mat displays the 'hello' screen, waiting for customer card dip.

When the customer session is busy and the local operator session is inactive, the ATM is in use by customer. The ATM is in this state as soon as customer dips card into reader. The customer session lasts until customer completes all transactions, or unless the host connection is broken.

When the local operator session is idle and the customer session is inactive, the ATM is set to a 'supervisor' position. The customer session is completed normally or is forced to stop and shutdown by the session manager. In this state, the local operator session is waiting for user sign on.

When the local operator session is busy and the customer session is inactive, the ATM is in use by an operator. The local operator session lasts until operator exits the session by setting the mode switch to 'normal' position.

In another embodiment of the present invention, the interactive interface display contains only graphics, without any language content. In a further embodiment, the interactive interface display contains language content and can support multi-lingual phrases. In still another embodiment, the interactive interface display contains language content, graphics, and/or voice data.

The foregoing description and associated figures detail only illustrative examples of the environment in which the invention can be used and are not intended to be limiting. For instance, the operating system for the session management is preferably Microsoft's Windows NT but may alternatively operate on other operating systems, such as a Macintosh, UNIX, or LINUX operating systems. Further, the programming languages, software platforms, operating systems, hardware components, communications protocols, and other technology mentioned in the foregoing description are by way of example only, and the present invention may always be enhanced to incorporate the most advanced available technology. Numerous modifications and adaptations thereof will be readily apparent to one skilled in the art, and the above disclosure is intended to cover all such modifications and equivalents.

## Claims

1. A platform-independent method for managing a self-service financial transaction terminal in at least one global communications network, comprising:
accessing said self-service financial transaction terminal;
receiving a session request and associating said session request with self-service financial transaction terminal parameters, wherein said self-service financial transaction terminal parameters comprise one or more of the following:
configuration parameters,
device parameters,
local operating parameters,
remote operating parameters,
network parameters,
communication parameters, and
business parameters;
allocating a priority identifier to said session request;
comparing said priority identifier associated with said session request and a real-time session status of said self-service financial transaction terminal to determine a session result;
queuing a plurality of said session results; and
implementing one of said session results without interruption of an active current session to said self-service financial transaction terminal.

2. The method of claim 1, wherein said session request comprises one or more of the following:
customer session,
local operator session,
diagnostic session,
system management session,
administrative session, and
remote operator session.

3. The method of claim 1, wherein said local operating parameters comprise one or more of the following:
customer session parameters,
local operator session parameters, and
diagnostic session parameters.

4. The method of claim 1, wherein said remote operating parameters comprise one or more of the following:
system management session parameters,
administrative session parameters, and
remote operator session parameters.

5. The method of claim 1, further comprising:
updating said self-service financial transaction terminal parameters upon implementation of one of said session results.

6. The method of claim 1, wherein said self-service financial transaction terminal communicates with an operator interface component of said global communications network.

7. The method of claim 6, wherein said operator interface component receives said real-time session status.

8. The method of claim 6, wherein said operator interface component communicates said real-time session status to said self-service financial transaction terminal.

9. The method of claim 6, wherein said operator interface component responds to inquiries about said real-time session status from said self-service financial transaction terminal.

10. The method of claim 1, wherein said self-service financial transaction terminal communicates with a system management agent component of said global communications network.

11. The method of claim 10, wherein said system management agent component requests said real-time session status of said self-service financial transaction terminal.

12. The method of claim 10, wherein said system management agent component responds to inquiries about said real-time session status from said self-service financial transaction terminal.

13. The method of claim 10, wherein said system management agent component reports in-service events of said self-service financial transaction terminal.

14. The method of claim 10, wherein said system management agent component reports out-of-service events of said self-service financial transaction terminal.

15. The method of claim 1, wherein said self-service financial transaction terminal communicates with a browser component of said global communications network.

16. The method of claim 15, wherein said browser provides access to said self-service financial transaction terminal.

17. The method of claim 15, wherein said browser displays an interactive interface display for a user accessing said sell-service financial transaction terminal.

18. The method of claim 1, wherein said self-service financial transaction terminal communicates with a back administration dialog component of said global communications network.

19. The method of claim 18, wherein said back administration dialog component communicates dialog status changes to said self-service financial transaction terminal.

20. The method of claim 1, wherein said self-service financial transaction terminal communicates with a diagnostics dialog component of said global communications network.

21. The method of claim 20, wherein said diagnostics dialog component communicates dialog status changes to said self-service financial transaction terminal.

22. The method of claim 1, wherein said self-service financial transaction terminal communicates with a device handler component of said global communications network.

23. The method of claim 22, wherein said device handler component communicates request device status from said self-service financial transaction terminal.

24. The method of claim 23, wherein said device status comprises status of one or more of the following:
a card reader;
a touch screen;
a PIN encryptor;
a front cover sensor;
a mode switch; and
a safe door.

25. The method of claim 1, wherein said self-service financial transaction terminal communicates with a device manager component.

26. The method of claim 25, wherein said device manager component communicates device instrument events to said self-service financial transaction terminal.

27. The method of claim 25, wherein said device manager component communicates device instrument events to said global communications network.

28. The method of claim 1, wherein said self-service financial transaction terminal communicates with a back door manager component of said global communications network.

29. The method of claim 28, wherein said back door manager component communicates host status instrument events to said self-service financial transaction terminal.

30. The method of claim 1, wherein said self-service financial transaction terminal communicates with a welcome mat component of said global communications network.

31. The method of claim 30, wherein said welcome mat component request an out-of-service display for said interactive interface display.

32. The method of claim 31, wherein said welcome mat communicates said real-time session status to said global communications network.

33. The method of claim 1, wherein said self-service financial transaction terminal comprises an ATM terminal.

34. The method of claim 1, wherein said self-service financial transaction terminal comprises an home banking terminal.

35. The method of claim 1, wherein said self-service financial transaction terminal comprises a staff terminal used within a financial institution.

36. The method of claim 1, wherein said self-service financial transaction terminal comprises an electronics communications device.

37. The method of claim 36, wherein said electronics communications device comprises one of the following:
a personal computer;
a screen telephone;
a personal data assistant; and
an interactive television.

38. The method of claim 1, wherein said self-service financial transaction terminal communicates with said global communications network over a public switch telephone network.

39. The method of claim 1, wherein said self-service financial transaction terminal communicates with said global communications network over a mobile radiotelephone network.

40. The method of claim 1, wherein said self-service financial transaction terminal communicates with said global communications network over a cellular network.

41. The method of claim 1, wherein said self-service financial transaction terminal communicates with said global communications network over a cable network.

42. The method of claim 1, wherein said self-service financial transaction terminal communicates with said global communications network over one of an internet, intranet, or extranet.

43. The method of claim 1, wherein said global communications network is a financial institution's global communications network.

44. A platform-independent system for managing a self-service financial transaction terminal in at least one global communications network, comprising:
means for accessing said self-service financial transaction terminal;
means for receiving a session request and associating said session request with self-service financial transaction terminal parameters, wherein said self-service financial transaction terminal parameters comprise one or more of the following:
configuration parameters,
device parameters,
local operating parameters,
remote operating parameters,
network parameters,
communication parameters, and
business parameters;
means for allocating a priority identifier to said session request;
means for comparing said priority identifier associated with said session request and a real-time session status of said self-service financial transaction terminal to determine a session result;
means for queuing a plurality of said session results; and
means for implementing one of said session results without interruption of an active current session to said self-service financial transaction terminal.

45. The system of claim 44, wherein said session request comprises one or more of the following:
customer session,
local operator session,
diagnostic session,
system management session,
administrative session, and
remote operator session.

46. The system of claim 44, wherein said local operating parameters comprise one or more of the following:
customer session parameters,
local operator session parameters, and
diagnostic session parameters.

47. The system of claim 44, wherein said remote operating parameters comprise one or more of the following:
system management session parameters,
administrative session parameters, and
remote operator session parameters.

48. The system of claim 44, further comprising:
means for updating said self-service financial transaction terminal parameters upon implementation of one of said session results.

49. The system of claim 44, wherein said self-service financial transaction terminal communicates with an operator interface component of said global communications network.

50. The system of claim 49, wherein said operator interface component receives said real-time session status.

51. The system of claim 49, wherein said operator interface component communicates said real-time session status to said self-service financial transaction terminal.

52. The system of claim 49, wherein said operator interface component responds to inquiries about said real-time session status from said self-service financial transaction terminal.

53. The system of claim 44, wherein said self-service financial transaction terminal communicates with a system management agent component of said global communications network.

54. The system of claim 53, wherein said system management agent component requests said real-time session status of said self-service financial transaction terminal.

55. The system of claim 53, wherein said system management agent component responds to inquiries about said real-time session status from said self-service financial transaction terminal.

56. The system of claim 53, wherein said system management agent component reports in-service events of said self-service financial transaction terminal.

57. The system of claim 53, wherein said system management agent component reports out-of-service events of said self-service financial transaction terminal.

58. The system of claim 44, wherein said self-service financial transaction terminal communicates with a browser component of said global communications network.

59. The system of claim 58, wherein said browser provides access to said self-service financial transaction terminal.

60. The system of claim 58, wherein said browser displays an interactive interface display for a user accessing said self-service financial transaction terminal.

61. The system of claim 44, wherein said self-service financial transaction terminal communicates with a back administration dialog component of said global communications network.

62. The system of claim 61, wherein said back administration dialog component communicates dialog status changes to said self-service financial transaction terminal.

63. The system of claim 44, wherein said self-service financial transaction terminal communicates with a diagnostics dialog component of said global communications network.

64. The system of claim 63, wherein said diagnostics dialog component communicates dialog status changes to said self-service financial transaction terminal.

65. The system of claim 44, wherein said self-service financial transaction terminal communicates with a device handler component of said global communications network.

66. The system of claim 65, wherein said device handler component communicates request device status from said self-service financial transaction terminal.

67. The system of claim 66, wherein said device status comprises status of one or more of the following:
a card reader;
a touch screen;
a PIN encryptor;
a front cover sensor;
a mode switch; and
a safe door.

68. The system of claim 44, wherein said self-service financial transaction terminal communicates with a device manager component.

69. The system of claim 68, wherein said device manager component communicates device instrument events to said self-service financial transaction terminal.

70. The system of claim 68, wherein said device manager component communicates device instrument events to said global communications network.

71. The system of claim 44, wherein said self-service financial transaction terminal communicates with a back door manager component of said global communications network.

72. The system of claim 71, wherein said back door manager component communicates host status instrument events to said self-service financial transaction terminal.

73. The system of claim 44, wherein said self-service financial transaction terminal communicates with a welcome mat component of said global communications network.

74. The system of claim 73, wherein said welcome mat component request an out-of-service display for said interactive interface display.

75. The system of claim 73, wherein said welcome mat communicates said real-time session status to said global communications network.

76. The system of claim 44, wherein said self-service financial transaction terminal comprises an ATM terminal.

77. The system of claim 44, wherein said self-service financial transaction terminal comprises an home banking terminal.

78. The system of claim 44, wherein said self-service financial transaction terminal comprises a staff terminal used within a financial institution.

79. The system of claim 44, wherein said self-service financial transaction terminal comprises an electronics communications device.

80. The system of claim 80, wherein said electronics communications device comprises one of the following:
a personal computer;
a screen telephone;
a personal data assistant; and
an interactive television.

81. The system of claim 44, wherein said self-service financial transaction terminal communicates with said global communications network over a public switch telephone network.

82. The system of claim 44, wherein said self-service financial transaction terminal communicates with said global communications network over a mobile radiotelephone network.

83. The system of claim 44, wherein said self-service financial transaction terminal communicates with said global communications network over a cellular network.

84. The system of claim 44, wherein said self-service financial transaction terminal communicates with said global communications network over a cable network.

85. The system of claim 44, wherein said self-service financial transaction terminal communicates with said global communications network over one of an internet, intranet, or extranet.

86. The system of claim 44, wherein said global communications network is a financial institution's global communications network.
